# EUROPEAN PATENT SPECIFICATION

(11) **EP 2 104 069 B1**
(45) Date of publication and mention of the grant of the patent: **22.12.2010**
(21) Application number: 09003686.4
(22) Date of filing: 13.03.2009
(51) Int. Cl.: G06T 3/40

(54) **Image processor for endoscope and image processing method for endoscope**
Bildprozessor für Endoskope und Bildverarbeitungsverfahren für Endoskope
Processeur d'image pour endoscope et procédé de traitement d'image pour endoscope

(30) Priority: 14.03.2008 JP 2008065188
(43) Date of publication of application: 23.09.2009
(73) Proprietor: FUJIFILM Corporation, Minato-ku Tokyo (JP)
(72) Inventor: Higuchi, Mitsuru, Saitama-shi Saitama (JP)
(74) Representative: Klunker . Schmitt-Nilson . Hirsch

(56) References cited:
- JP-A- 10 155 737
- US-A1- 2004 190 786
- US-A1- 2005 073 578
- US-B1- 6 643 416

## Description

### FIELD OF THE INVENTION

The present invention relates to an image processor for processing image data output from an endoscope, and an image processing method for the endoscope.

### BACKGROUND OF THE INVENTION

An endoscopy system consists of an endoscope and an image processor for the endoscope. The endoscope has an imaging device, e.g. a CCD, which is built in a distal end of an insertion tube that is inserted into a body cavity or tract of a patient, whereas the image processor processes image data output from the endoscope and outputs the processed image data to a monitor. The endoscopy system is provided with so-called freeze function for freezing a frame of the displayed endoscopic image on the monitor for the sake of detailed inspection of a particular portion or site of the body cavity shown in the displayed image.

While the monitor is displaying a still image or freeze frame of the endoscopic image only, the operator of the endoscope cannot see the present position and condition of the insertion tube in the body cavity, the risk of hurting the inner wall of the body cavity by the tip of the insertion tube increases. To lessen the risk, the image processor for the endoscope is provided with so-called picture-in-picture (PIP) display function, whereby a small sub-screen is inset in a main window displaying the freeze frame, and a real-time image taken by the endoscope is displayed in the sub-screen.

For example, JPA 10-155737 discloses an endoscopy system, wherein image data after going through color-conversion and gamma-correction is fed to a couple of circuits for a parent screen and a child screen, and image frame is size-reduced in the circuit for the child screen. After masking the image frame for the parent screen and one for the child screen, the image frame for the child screen is superimposed on the image frame for the parent screen, to compose a PIP screen. The masking process is for masking or cutting a marginal area of each frame where any useful subject image is not formed due to so-called vignetting, in order to improve visibility of the displayed endoscopic image. The PIP processing disclosed in this prior art provides a visible PIP screen where the useless marginal area is masked out. US 2005/0073 578 A1 discloses a video processor for endoscopic images having a mask and merge functionality.

The PIP function is applied not only to the endoscopy system, but also to general AV equipments like TVs and video players. Therefore, general-purpose video output ICs, into which a set of circuits necessary for running the PIN function are integrated, are commercially available at reasonable prices. However, since the masking is such a process that is necessary for the endoscopy system but unnecessary for the general AV equipment, the general-purpose video output IC cannot serve for the masking process. For this reason, the PIP processing of the above prior art needs a circuit designed especially for this purpose. Designing and manufacturing the special circuits entail enormous cost.

As a solution for this problem, the image data as output from the imaging device may first be subjected to the masking and thereafter to the PIN processing. Then, it becomes possible to use the general-purpose video output IC for composing a visible PIP screen at a low cost.

Recently, the resolution of the monitors of the endoscopy systems has been getting higher on demand for displaying images with higher definition. Corresponding to the high resolution monitors, the resolution of the imaging devices of the endoscopes have been getting higher. Since medical facilities usually need many endoscopes, the cost of replacing all the endoscopes at once with ones adapted to the high resolution monitors could be too heavy to shoulder. For this reason, there is a demand for a compatible endoscopy system that allows using the conventional endoscopes with low resolution imaging devices in connection to the high-definition monitor.

Without any adjustment, the image data output from the low resolution imaging device will reproduce an inferior endoscopic image on the high resolution monitor: the image suffers distortion because of the difference in aspect ratio, or extraneous blanks appear on the monitor screen. In order to prevent this, it is necessary to convert the resolution of the image data output from the low resolution imaging device so as to correspond to the high resolution monitor. The above-mentioned general purpose video output ICs, which have the function to make the PIP processing, mostly include the function to make the resolution conversion. Consequently, it is preferable to use the general purpose video output IC with the function of the PIP processing for the resolution conversion of the endoscopic image data, for the sake of providing an inexpensive image processor for the compatible endoscopy system.

To the general purpose video output IC for the resolution conversion, the image data must go through the masking process before the resolution conversion. However, as the resolution of the image data increases through the resolution conversion, the rim of the masked endoscopic image, i.e. the border between an image display area and the masked peripheral area of the endoscopic image, get rough and dull, which damages the visibility of the endoscopic image. Using another circuit for the resolution conversion will, however, raise the cost in comparison with the general-purpose video output IC.

### SUMMARY OF THE INVENTION

In view of the foregoing, an object of the present invention is to provide an image processor for processing image data output from an endoscope to display at least an endoscopic image on a monitor and a method of processing endoscopic images, which cut the cost for the PIP processing and the resolution conversion of the endoscopic images without lowering the visibility of the endoscopic images.

On the presumption that each frame of the image data consists of an image area containing a subject image formed on an imaging surface of an imaging device of the endoscope and a useless area corresponding to a marginal area of the imaging surface where no subject image is formed, an image processor of the present invention comprises a first masking device for masking each frame of the image data with a masking image to produce a first image frame, the masking image having an unmasking area for exposing only the image area as an image display area of the first image frame; a resolution converting device for converting resolution of the first image frame so as to adjust the resolution to the monitor; and a second masking device for making a masking process for exposing only an image display area of a resolution-converted first image frame.

Preferably, the unmasking area of the masking image used by the first masking device is approximately round, and the image display area of the first image frame has a round rim corresponding to the unmasking area. On the presumption that the rim of the image display area gets blunt through the resolution conversion, the second masking device makes the masking process with a masking image having a round unmasking area that is smaller than or inscribed in the image display area of the resolution-converted first image frame.

The image processor further comprises a size reducing device for reducing size of the first image frame to produce a second image frame; a second resolution converting device for converting resolution of the second image frame so as to adjust the resolution to the monitor; and an image composer for producing a composite image from the resolution-converted first image frame and a resolution-converted second image frame. The second masking device masks the composite image with a specific masking image, which has the unmasking area for exposing only the image display area of the first image frame and an unmasking area for exposing the second image frame in the composite image.

The image composer may superimpose the second image frame on one of rectangular corners of the first image frame. In that case, the specific masking image for the composite image has a cutout formed in a corner thereof corresponding to the corner on which the second image frame is superimposed, as the unmasking area for exposing the second image frame.

The resolution converting devices for converting resolution of the first and second image frames, the size reducing device, and the image composer may preferably be configured in a single general-purpose IC for video output.

An image processing method of the present invention comprises:
a first masking step of masking each frame of the image data with a masking image to produce a first image frame, the masking image having an unmasking area for exposing only the image area as an image display area of the first image frame;
a size reducing step of reducing size of the first image frame to produce a second image frame;
a resolution converting step of converting resolution of the first and second image frames so as to adjust the resolution to the monitor;
an image composing step of producing a composite image from a resolution-converted first image frame and a resolution-converted second image frame; and
a second masking step of masking the composite image with a specific masking image that has an unmasking area for exposing only an image display area of the first image frame and an unmasking area for exposing the second image frame in the composite image.

According to the present invention, the first masking device is provided for masking the useless marginal area of each endoscopic image before the resolution conversion, so it is possible to configure the device for the resolution conversion and the PIP processing at a low cost using the commercially available inexpensive general-purpose IC for video output. Although the rim of the image display area of the masked endoscopic image gets rough as a result of the resolution conversion to a higher resolution adjusted to the monitor, the rough-edged rim is covered with the masking image through the masking process in the second masking device, so the rim around the image display area of the consequent endoscopic image is made sharp and clear, improving visibility of the endoscopic image displayed on the screen.

### BRIEF DESCRIPTION OF THE DRAWINGS

The above and other objects and advantages of the present invention will be more apparent from the following detailed description of the preferred embodiments when read in connection with the accompanied drawings, wherein like reference numerals designate like or corresponding parts throughout the several views, and wherein:
Figure 1 is a schematic block diagram illustrating the interior of an endoscopy system;
Figure 2 is an explanatory diagram illustrating an example of an ordinary observation screen;
Figure 3 is an explanatory diagram illustrating an example of a PIP screen;
Figure 4 is the schematic block diagram illustrating the interior of the image processor;
Figure 5 is an explanatory diagram illustrating the concept of masking process in a first masking processor;
Figure 6 is an explanatory diagram illustrating the concept of resolution conversion in a second resolution conversion processor;
Figure 7 is an explanatory diagram illustrating the concept of size-reduction in a size reduction processor and resolution conversion in a second resolution conversion processor;

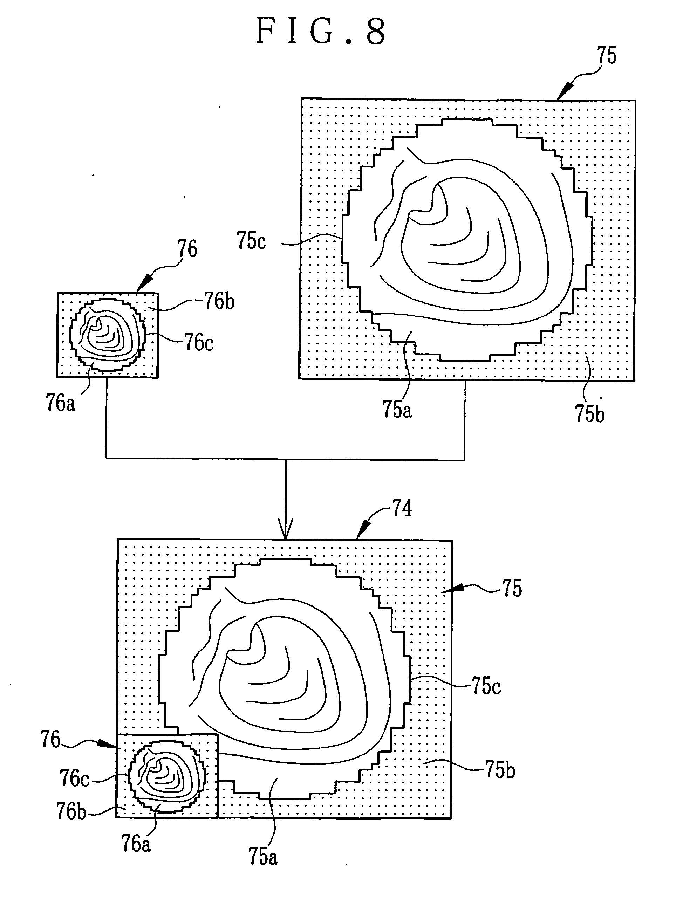

Figure 8 is an explanatory diagram illustrating the concept of image composition in an image composer;
Figure 9 is an explanatory diagram illustrating the concept of masking of a PIP image in a second masking processor;
Figure 10 is an explanatory diagram illustrating the concept of a masking process in the second masking processor to produce an ordinary display image;
Figure 11 is a flowchart illustrating a sequence of displaying an ordinary observation screen and a PIP screen; and
Figure 12 is an explanatory diagram illustrating the concept of a masking process, whereby a main image and an inset image of the PIP screen are subjected to the masking process.

### DESCRIPTION OF THE PREFERRED EMBODIMENTS

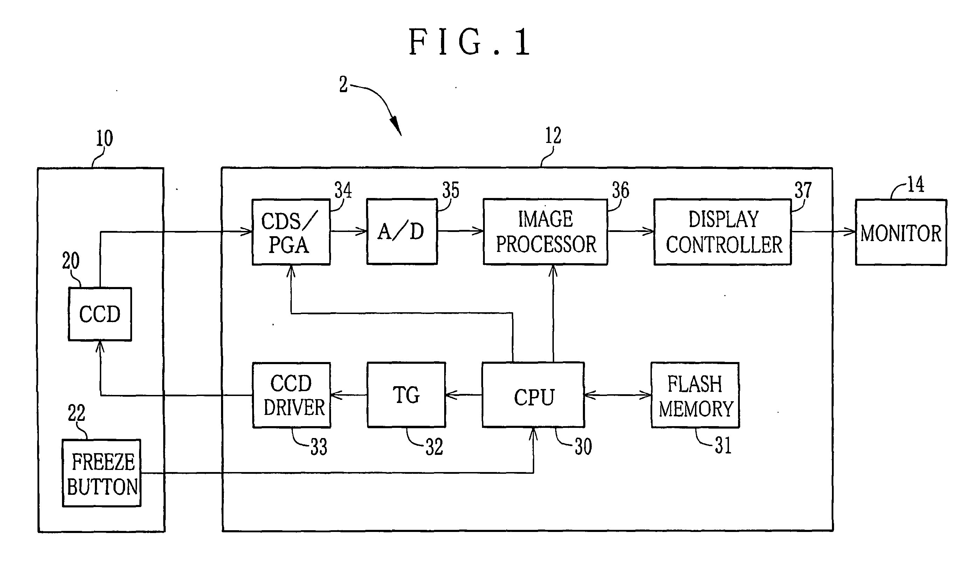

Fig. 1 is a schematic block diagram illustrating the interior of an endoscopy system 2. The endoscopy system 2 consists of an electronic endoscope 10 shooting in a patient's body cavity, a processor unit 12 generating an endoscopic image, which is an image processing apparatus for an endoscope, and a monitor 14 displaying the endoscopic image. The electronic endoscope 10 is removably connected via a connector to the processor unit 12 and a light source unit that is omitted from the drawings. For the monitor 14, for example, a liquid crystal monitor with an Extended Graphics Array (XGA) resolution of 1024 pixels x 768 lines is used.

The electronic endoscope 10 is provided with a CCD (charge coupled device image sensor) 20 and a freeze button 22. The CCD 20 is arranged at the distal end of an inserter into the patient's body cavity and takes a subject image incident through an observation port and an optical system. For the CCD 20, for example, the one for NTSC (National Television System Committee) output with the resolution of 720 pixels x 242 lines is used. The freeze button 22 is arranged in an operating part at hand of the electronic endoscope 10 and is electrically connected to the processor unit 12. The freeze button 22 is for giving the processor unit 12 an instruction to freeze-frame the moving endoscopic image displayed on the monitor 14. Those who execute the endoscopic inspection press the freeze button 22 to display the freeze-frame of the endoscopic image, for example, when they want to observe an affected area in detail.

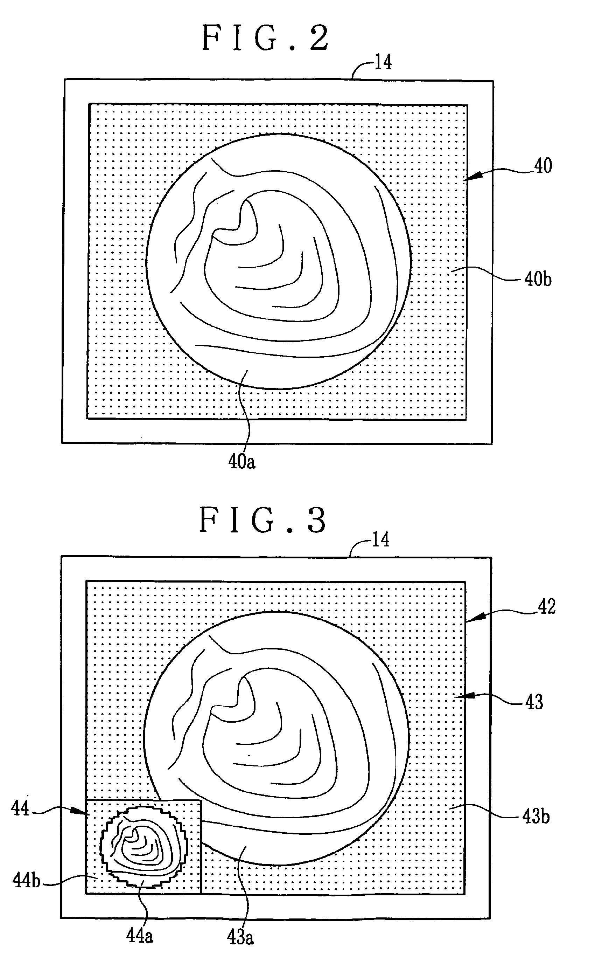

When the endoscopy system 2 starts an inspection, the monitor 14 displays an ordinary observation screen 40 shown in Fig.2. The ordinary observation screen 40 consists of an image display area 40a displaying the endoscopic image taken by the CCD 20 and a masked area 40b covering over an unnecessary part of the image. In the image display area 40a, the real-time endoscopic image is displayed as a moving image.

Pressing the freeze button 22 switches the display on the monitor 14 from the ordinary observation screen 40 to a PIP (picture-in-picture) screen 42 shown in Fig.3. The PIP screen 42 is provided with a main window 43 and an inset window 44. The main window 43 and the inset window 44 have image display areas 43a and 44a and masked areas 43b and 44b respectively, in the same way as the ordinary observation screen 40.

The image display area 43a of the main window 43 displays a freeze frame or still frame of the endoscopic image, the frame being taken at the moment of pressing the freeze button 22. On the other hand, the image display area 44a of the inset window 44 displays the endoscopic image as the real-time moving image. Forming the inset window 44 to display the moving image simultaneously with the still image in this way is preventing the inserter of the electronic endoscope 10 from hurting the patient's body cavity, although the inserter can hurt the patient's body while the freeze-frame alone is displayed.

The processor unit 12 is provided with a CPU 30, a flash memory 31, a timing generator (TG) 32, a CCD driver 33, a correlated double sampled/programmable gain amplifier (CDS/PGA) 34, an analog-digital converter (A/D) 35, an image processor 36 and a display controller 37.

In the flash memory 31, which is a nonvolatile semiconductor memory, stores various programs to control the processor unit 12. The CPU 30 controls the overall operation of every part of the processor unit 12 by reading one of the programs out of the flash memory 31 and by processing the program sequentially. The CPU 30 is also connected to the freeze button 22 via a universal code, the connector and the like, which are provided in the electronic endoscope 10.

Under the control of the CPU 30, the TG 32 inputs a timing signal (clock pulse) to the CCD driver 33. The CCD driver 33 inputs a driving signal to the CCD 20 based on the input timing signal, to control the timing of reading out charges accumulated in the CCD 20 and the shutter speed of an electronic shutter in the CCD 20.

The CDS/PGA 34 executes denoising and amplification to an imaging signal output from the CCD 20 based on the control of the CCD driver 33 and outputs it to the A/D 35. The A/D 35 converts the analog imaging signal output from the CDS/PGA 34 into the digital image data and outputs it to the image processor 36.

The image processor 36 performs various image processing to the image data digitalized at the A/D 35 according to the instruction from the CPU 30. The image processor 36 then outputs the image data after the image processing to the display controller 37. The display controller 37 converts the image data output from the image processor 36 into such a video signal as a component signal or a composite signal according to the format of the monitor 14 and outputs the video signal to the monitor 14. Consequently, the ordinary observation screen 40 or the PIP screen 42 is displayed on the monitor 14.

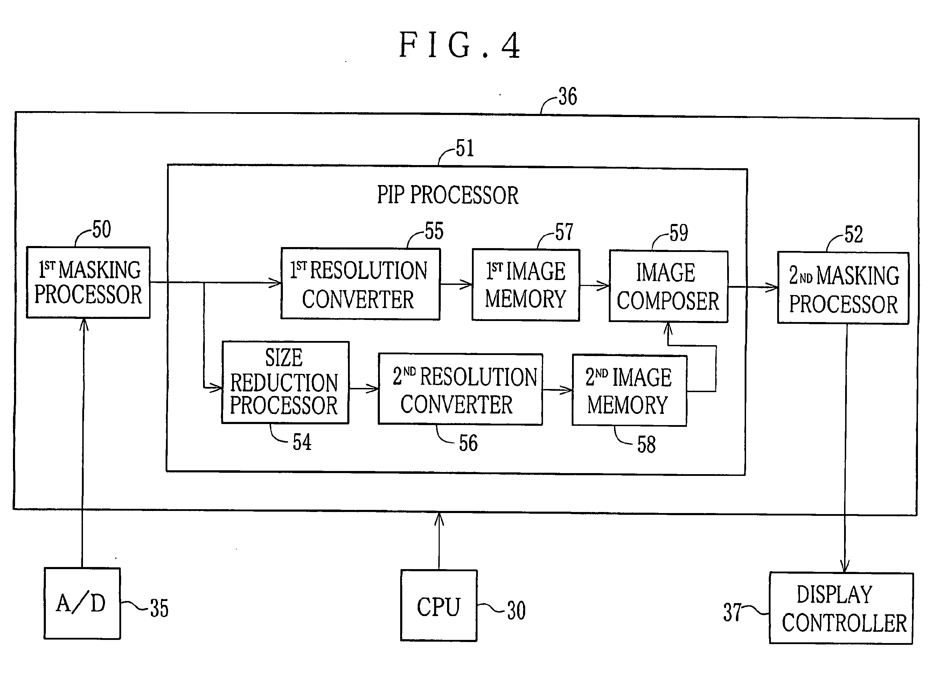

Fig.4 is the schematic block diagram illustrating the interior of the image processor 36. The image processor 36 is provided with a first masking processor (a first masking device) 50 that executes masking process on the image data output from the A/D 35, a PIP processor (a composite image generating device) 51 that executes PIP processing of the image data output from the first masking processor 50, and a second masking processor (a second masking device) 52 that executes the masking process again on the image data output from the PIP processor 51.

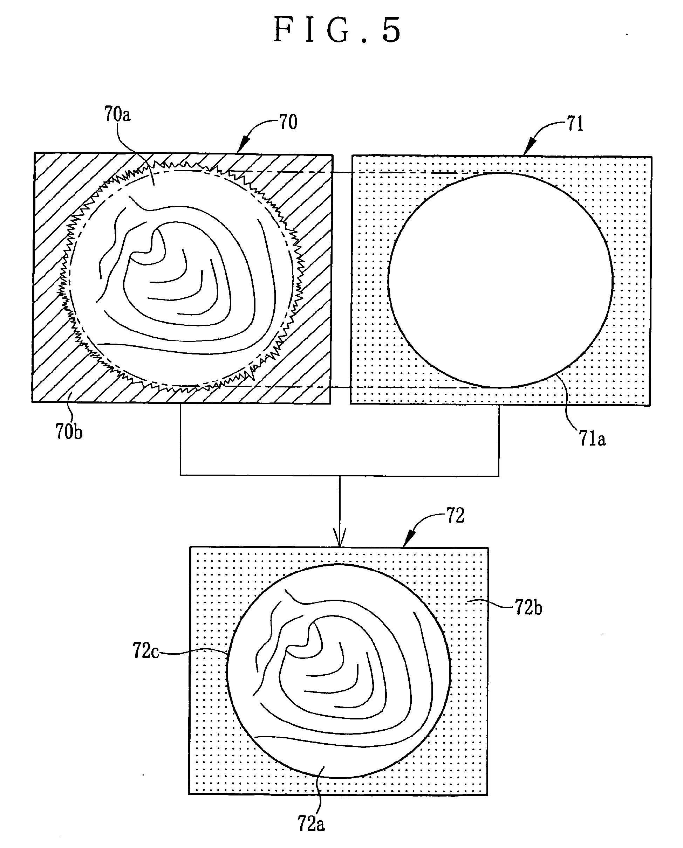

As shown in Fig. 5, an original image 70 output from the A/D 35 has an image area 70a containing the subject image (endoscopic image) that is formed on an imaging surface of the CCD 20 by the optical system in the electronic endoscope 10, and a useless area 70b shown as a shaded area where any subject image was not formed. The useless area 70b is so-called vignetting which occurs because the optical system in the electronic endoscope 10 forms the subject image substantially in a circle on the imaging surface of the CCD 20.

A border between the image area 70a and the useless area 70b does not form a smooth curve but rough-edged because of the effect of reflection on the lens frame of the optical system. Consequently, because of the flickering rim around the image area 70a, the original image 70 gives a worse view of the endoscopic image if it is displayed directly on the monitor 14. For this reason, the first masking processor 50 processes the original image 70 for masking with a masking image 71 so as to improve the view of the endoscopic image.

The masking image 71 is a rectangular frame of the same size as the original image 70. The masking image 71 has an opening or unmasking area 71a of an approximately round shape. As shown by two-dot chain lines in Fig. 5, the opening 71a is formed a bit smaller than the border between the image area 70a and the useless area 70b of the original image 70, and the relative position of the opening 71a in the masking image 71 is concentric to the image area 70a in the original image 70.

When the first masking processor 50 receives the original image 70 from the A/D 35, the first masking processor 50 overlays the masking image 71 on the original image 70 to generate a first image 72 which consists of an image display area 72a displaying the endoscopic image and a masked area 72b with a round border 72c between them. Because the useless area 70b of the original image 70 and the flickered boundary between the image area 70a and the useless area 70b are covered with the masked area 72b in the first image 72, the first image 72 provides a better view of the endoscopic image. The first masking processor 50 outputs the first image 72 to the PIP processor 51.

The PIP processor 51 consists of a size reduction processor 54, a first resolution converter 55, a second resolution converter 56, a first image memory 57, a second image memory 58 and an image composer 59. To the PIP processor 51, a commercially available general-purpose IC for video is applied.

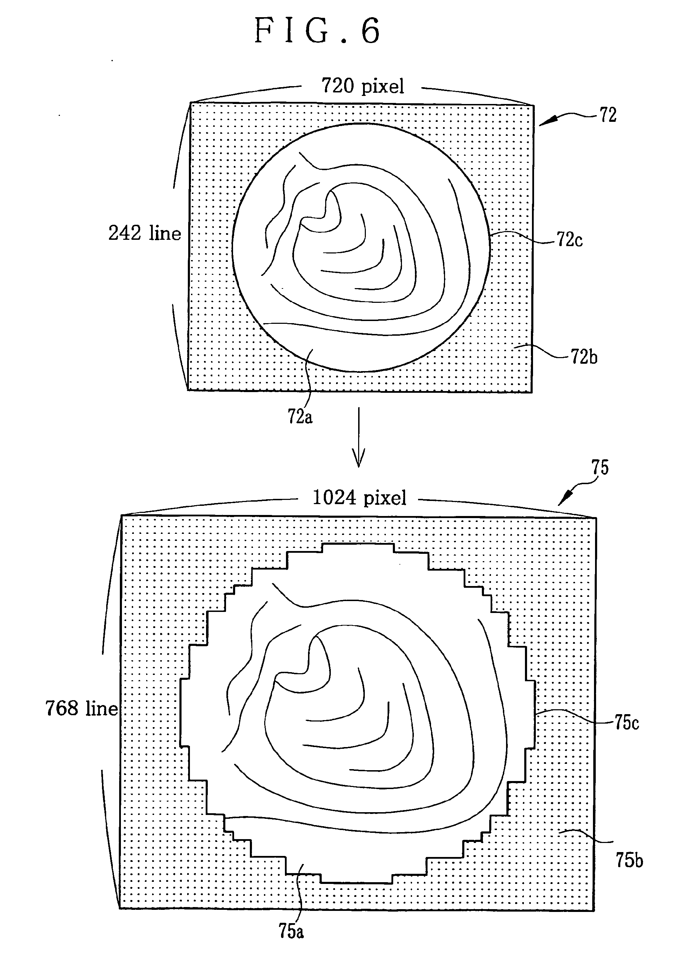

In the PIP processor 51, the first image 72 from the first masking processor 50 is fed to the size reduction processor 54 and the first resolution converter 55. When the input first image 72 has a lower resolution than the monitor 14, the first resolution converter 55 converts the resolution of the first image 72 to increase it to correspond to the resolution of the monitor 14, as shown in Fig.6. As mentioned above, since the resolution of the monitor 14 is 1024 pixels x 768 lines and that of the CCD 20 is 720 pixels x 242 lines in this embodiment, the first resolution converter 55 produces an image frame 75, which is a rectangular frame of 1024 pixels x 768 lines, from the first image 72 of 720 pixels x 242 lines. The image frame 75 output from the first resolution converter 55 is a resolution-converted first image frame and is written as a main image frame 75 in the first image memory 57.

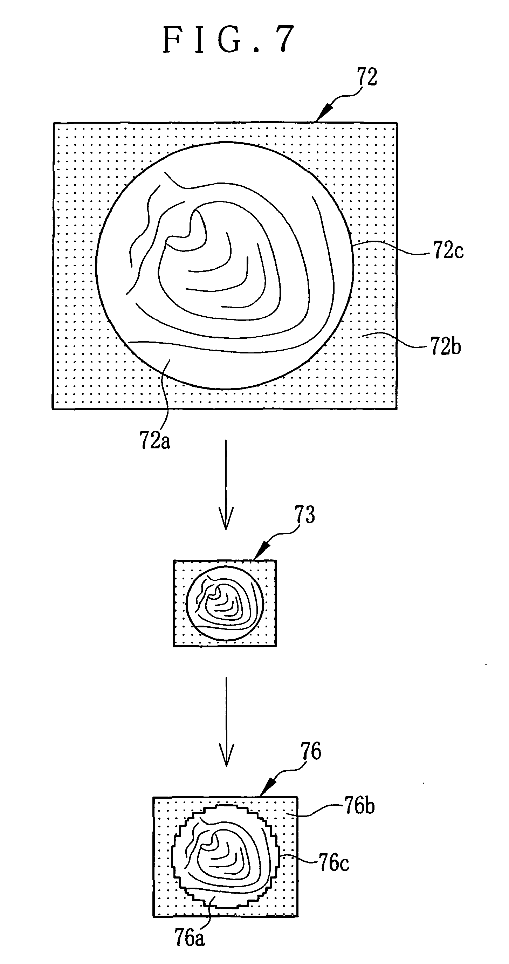

The size reduction processor 54 performs a size reduction process of the first image 72 to generate a second image 73, as shown in Fig.7. The second image 73 is a frame whose size is scaled down vertically and horizontally from the first image 72 at the same reduction rate. Like the first image 72, the second image 73 also has an image display area 73a displaying the endoscopic image and a masked area 73b with a round border 73c between them. The size reduction processor 54 outputs the second image 73 to the second resolution converter 56.

The second resolution converter 56 converts the resolution of the second image 73 to adjust it to the resolution of the monitor 14, generating a resolution-converted second image 76. The resolution-converted second image 76 is used for displaying the moving image in the inset window 44 on the PIP screen 42, so the resolution-converted second image 76 may be called a sub image frame 76. The sub image frame 76 is written in the second image memory 58.

The image composer 59 accesses the respective image memories 57 and 58 at a given timing to read out the main and sub image frames 75 and 76 stored in these image memories 57 and 58. After reading out the main and sub image frames 75 and 76, the image composer 59 superimposes the sub image frame 76 on the bottom left corner of the main image frame 75 to generate a composite image 74, which is a picture-in-picture image wherein the sub image frame 76 is inset in the main image frame 75. The main and sub image frames 75 and 76 have image display areas 75a and 76a and masked areas 75b and 76b, respectively.

Thus, the PIP processor 51 executes the resolution conversion and the PIP processing of the first image 72 that is output from the first masking processor 50. The CPU 30 controls the operation of the PIP processor 51 as set forth in detail below.

When the freeze button 22 is actuated to give the instruction to display the freeze-frame of the endoscopic image, the CPU 30 controls the PIP processor 51 to execute both the resolution conversion and the PIP processing. Consequently, when the instruction is given to display the freeze-frame of the endoscopic image, the PIP processor 51 outputs the composite PIP image 74 to the second masking processor 52. On the other hand, so long as the freeze button 22 is not actuated, the CPU 30 controls the PIP processor 51 to execute only the resolution conversion. On this occasion, the PIP processor 51 converts the resolution of the first image 72 at the first resolution converter 55 and outputs the resolution-converted masked image as the main image frame 75 with the higher resolution to the second masking processor 52, not generating the second image 73 at the size reduction processor 54 nor generating the composite image 74 at the image composer 59.

When the freeze button 22 is pressed to give the instruction to display a freeze-frame of the endoscopic image, the CPU 30 prohibits the first resolution converter 55 from writing the main image frame 75 in the first image memory 57. Consequently, when generating the PIP image 74, the image composer 59 reads the same main image frame 75 as taken at the press of the freeze button 22 out of the first image memory 57 and updates only the sub image frame 76 to the latest one, so the freeze-frame and the moving image are displayed respectively in the main window 43 and the inset window 44 on the PIP screen 42.

As shown in the Fig. 6, the resolution conversion to increase the resolution results in enhancing the outline of pixels and thus unsharpens the border 75c between the image display area 75a and the masked area 75b of the resolution-converted main image frame 75. The blunt border 75c, which may also be regarded as the rim 75c around the image display area 75a, worsens the visibility of the endoscopic image in the image display area 75a. In order to improve the visibility of the endoscopic image, the second masking processor 52 executes the masking process on the resolution-converted main image frame 75 or the PIP image 74 as it is output from the PIP processor 51.

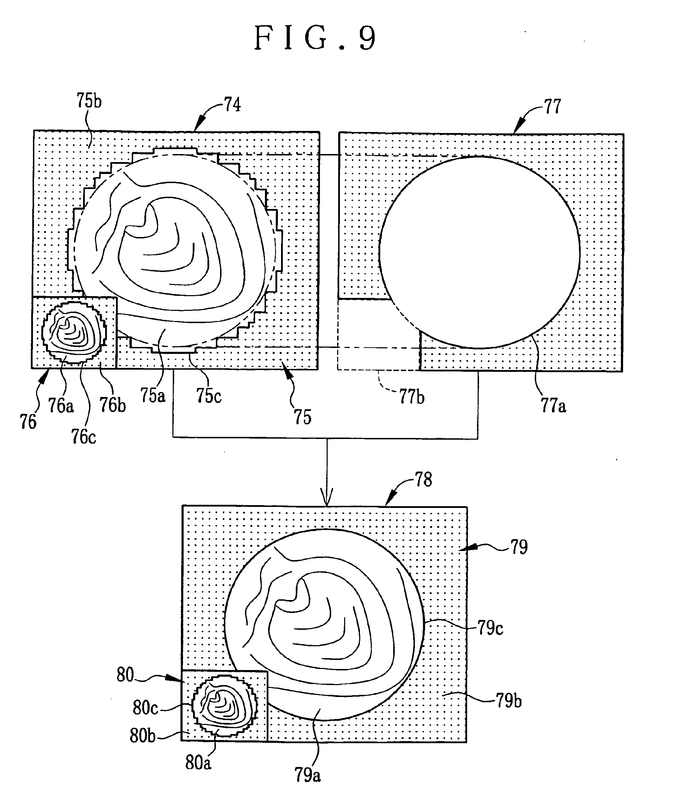

Upon receipt of the PIP image 74 from the PIP processor 51, the second masking processor 52 overlays a masking image 77 on the PIP image 74 to generate a display PIP image 78, as shown in Fig.9, which is for displaying the PIP screen 42 on the monitor 14. The masking image 77 has the same frame size as the resolution-converted main image 75 and the PIP image 74. The masking image 77 also has an opening 77a and a cutout 77b as shown by broken lines in Fig. 9. As shown by two-dot chain lines in Fig. 9, the opening 77a forms a circle inscribed in the rim 75c of the image display area 75a of the main image frame 75, the rim 75c being rough-edged as a result of the resolution conversion to the higher resolution. The cutout 77b is formed by cutting out the bottom left corner of the masking image 77 complementarily to the sub image frame 76. The cutout 77b exposes or unmasks the sub image frame 76.

The display PIP image 78 has a main image 79 and an inset image 80, which correspond to the main image frame 75 and the sub image frame 76 respectively. The main and inset images 79 and 80 have image display areas 79a and 80a and masked areas 79b and 80b, corresponding to the image display areas 75a and 76a and the masked areas 75b and 76b respectively. The rough-edged rim 75c of the main image frame 75 of the PIP image 74 is covered with the masking image 77 in the display PIP image 78, so a rim 79c of the image display area 79a of the main image 79 is sharp and clear. Consequently, the display PIP image 78 allows a better view of the endoscopic image displayed in the image display area 79a. The second masking processor 52 outputs the display PIP image 78 to the display controller 37. Consequently, the PIP screen 42 is displayed on the monitor 14, as shown in Fig.3.

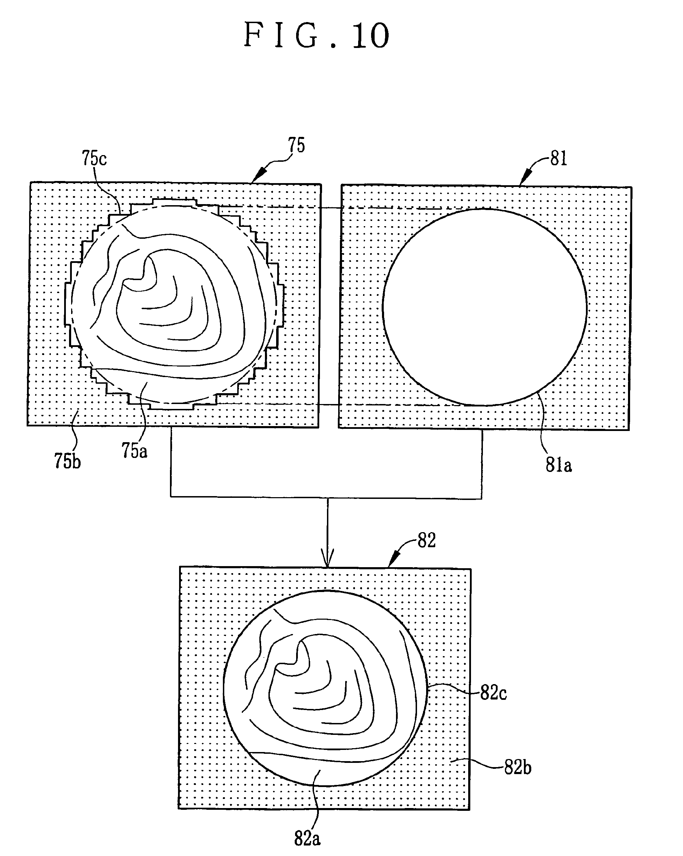

On the other hand, when the second masking processor 52 receives the resolution-converted main image frame 75 from the PIP processor 51, the second masking processor 52 overlays a masking image 81 on the main image frame 75 to generate a display image 82 for displaying the ordinary screen 40 on the monitor 14, as shown in Fig.10. The display image 82 has an image display area 82a and a masked area 82b corresponding to the masking image 81. The masking image 81 is a rectangular frame having the same size as the main image frame 75. The masking image 81 also has an opening or unmasking area 81a. Like the opening 77a of the masking image 77, the opening 81a forms a circle inscribed in the rough-edged rim 75c of the image display area 75a of the resolution-converted main image frame 75.

So the rough-edged rim 75c of the resolution-converted main image frame 75 is covered with the masking image 81 when the masking image 81 is overlaid on the resolution-converted main image frame 75. Consequently, the display image 82 has a sharp rim 82c around the image display area 82a, allowing a better view of the endoscopic image displayed in the image display area 82a. The second masking processor 52 outputs the generated display image 82 to the display controller 37, so that the ordinary observation screen 40 is displayed on the monitor 14.

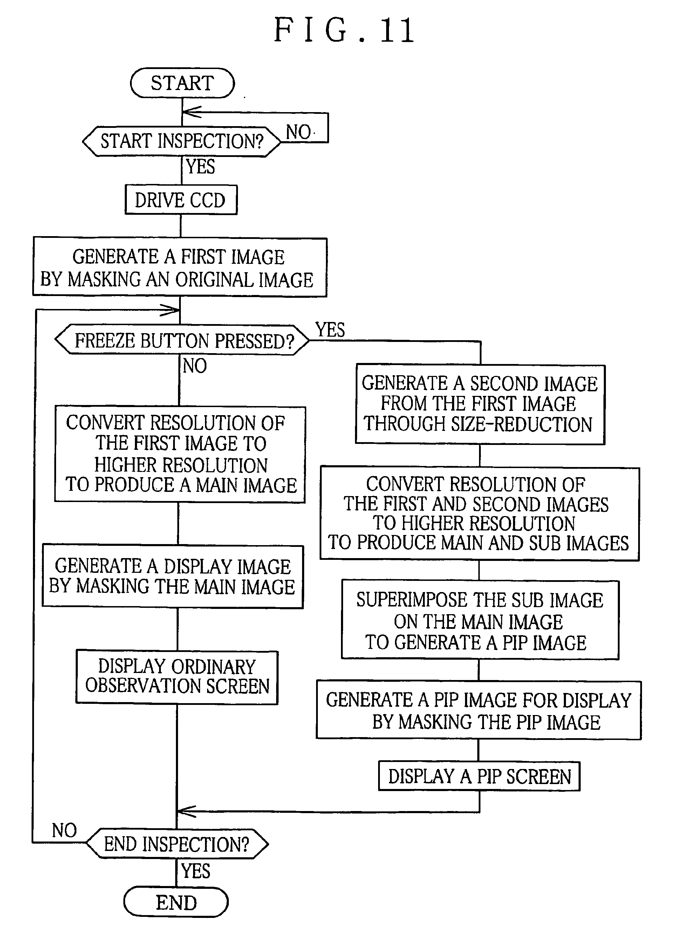

Next, the operation of the endoscopy system 2 according to the above described embodiment will be explained, while referring to the flowchart shown in Fig.11. Prior to an inspection with the endoscopy system 2, the electronic endoscope 10, as having been washed and disinfected, is connected to the processor unit 12. Then, a start button of the processor unit 12 is pressed to start the inspection.

When the start of the inspection is indicated, the CPU 30 of the processor unit 12 controls the TG 32 to activate the CCD 20 by the CCD driver 33. According to the driving signal from the CCD driver 33, the CCD 20 takes the subject image and outputs the imaging signal to the CDS/PGA 34. After going through the denoising and amplification by the CDS/PGA 34, the imaging signal from the CCD 20 is converted to the digital image data by the A/D 35. The A/D 35 inputs the converted image data to the first masking processor 50 of the image processor 36.

In the first masking processor 50, the original image 70 represented by the image data output from the A/D 35 is subjected to the masking process, to generate the first image 72. The first image 72 is fed from the first masking processor 50 to the size reduction processor 54 and the first resolution converter 55 of the PIP processor 51.

Unless the freeze button 22 is actuated to give the instruction to display the freeze-frame of the endoscopic image, the PIP processor 51 executes only the resolution conversion of the first image 72 at the first resolution converter 55 each time the first image 72 is fed from the first masking processor 50. The first resolution converter 55 increases the resolution of the first image 72 and writes the resolution-converted main image frame 75 in the first image memory 57. The image composer 59 reads out the main image frame 75 from the first image memory 57 and inputs it to the second masking processor 52.

The second masking processor 52 executes the masking of the resolution-converted main image frame 75 with the masking image 81 to generate the display image 82. In the display image 82, the rough-edged rim 75c of the resolution-converted main image frame 75 is covered with the masking image 81, so the visibility of the endoscopic image displayed in the image display area 82a is improved.

The display image 82 is input to the display controller 37. The display controller 37 converts the display image 82 into the video signal corresponding to the format of the monitor 14, and outputs it to the monitor 14. Consequently, the ordinary observation screen 40 is displayed on the monitor 14, as shown in Fig.2.

An operator who is making the endoscopy inspects the patient's body cavity, while looking at the endoscopic image displayed as the moving image in the image display area 40a of the ordinary observation screen 40. Intending to inspect in more detail, the operator presses the freeze button 22 to instruct the processor unit 12 to display the freeze-frame of the endoscopic image. Upon receipt of the instruction to display a freeze frame of the endoscopic image, the CPU 30 of the processor unit 12 controls the PIP processor 51 to perform both the resolution conversion and the PIP processing. In the PIP processing, the CPU 30 prohibits the first resolution converter 55 from writing new image frame in the first image memory 57, so the first image memory 57 holds an image frame that is written therein at the moment the freeze button is pressed.

Moreover, in the PIP processing, the PIP processor 51 directs the size reduction processor 54 to scale down the first image 72. The size reduction processor 54 performs the size reduction of the first image 72 to generate the second image 73, and inputs the second image 73 to the second resolution converter 56. The second resolution converter 56 processes the second image 73 to increase the resolution of the second image 73, and writes the sub image frame 76 with higher resolution in the second image memory 58. Then the image composer 59 reads out the sub image frame 76 from the second image memory 58.

Simultaneously with the sub image frame 76, the image composer 59 reads out the main image frame 75 from the first image memory 57, i.e. the frame frozen by the press of the freeze button 22. The image composer 59 then superimposes the sub image frame 76 on the bottom left corner of the main image frame 75 to generate the PIP image 74. The generated PIP image 74 is input to the second masking processor 52. The second masking processor 52 executes the masking process on the input PIP image 74 with the masking image 77 to generate the display PIP image 78. Because the blunt rim 75c of the image display area 75a of the resolution-converted main image frame 75 is covered with the masking image 77 to provide the sharp rim 79c around the image display area 79a in the main image 79 of the display PIN image 78, the endoscopic image displayed as the main image 79 is improved in visibility.

The display PIP image 78 is input to the display controller 37. The display controller 37 converts the display PIP image 78 into the video signal corresponding to the format of the monitor 14 and outputs it to the monitor 14. Consequently, the PIP screen 42 is displayed on the monitor 14. To complete inspection of the still or frozen endoscopic image displayed in the image display area 43a of the main window 43 on the PIP screen 42, the operator presses the freeze button 22 again to give the processor unit 12 an instruction to release the freeze of the endoscopic image. Then, the monitor 14 switches from the PIP screen 42 to the ordinary observation screen 40.

In this way, according to the above described embodiment, it is possible to achieve the PIP processing function and the resolution conversion function at a low cost, using the general-purpose video output IC for the PIP processor 51 that executes the resolution conversion and generates the composite image. Moreover, because the second masking processor 52 executes the masking process of the PIP image 74, the endoscopic image maintains good visibility in the display PIP image 78.

Meanwhile, the resolution conversion for increasing the resolution makes the edge or rim of the image display area rough not only in the first image 72 but also in the second image 73. In the above described embodiment, the masking process of the PIP image 74 is carried out with the masking image 77 that has the opening 77a and the cutout 77b, so the inset sub image frame 76 is not covered with the masking image 77 and a rough-edged rim 76c of the image display area 76a of the inset sub image frame 76 remains as is. Namely, a border 80c between the image display area 80a and the masked area 80b of the inset image 80 of the display PIP image 78 is also rough.

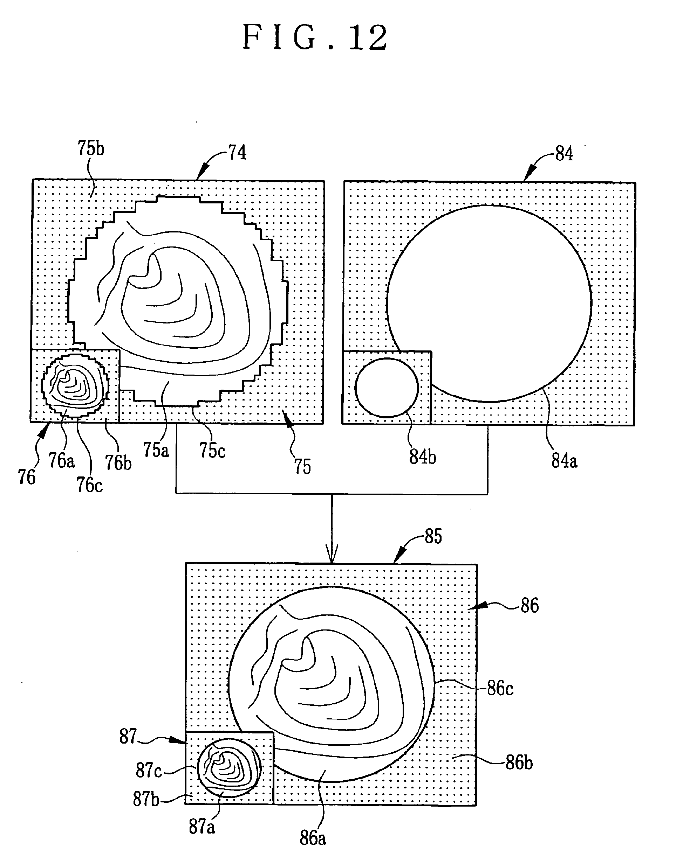

To eliminate the above disadvantage of the first embodiment, it is also possible to execute the masking process using a masking image 84 that has a first opening 84a exposing only the image display area 75a of the main image frame 75 and a second opening 84b exposing only the image display area 76a of the inset sub image frame 76, to generate a display PIP image 85, as shown in Fig.12.

The display PIP image 85 has a main image 86 and an inset image 87. The main and inset images 86 and 87 respectively have image display areas 86a and 87a and masked areas 86b and 87b correspondingly to the image display areas 75a and 76a and the masked areas 75b and 76b. Because the blunt rims 75c and 76c of the image display area 72a and 76a of the PIP image 74 are covered with the masking image 84, rims 86c and 87c of the image display area 86a and 87a are sharp in the display PIP image 85, so the visibility of the endoscopic images displayed in the respective image display areas 86a and 87a are improved.

However, the masking process using such a mask that has a complicated shape like the masking image 84 takes a longer processing time and needs a large image capacity, as the data volume of the masking image 84 and thus the display PIP image 85 get larger. In addition, when the size of the second image 73 is small enough, the roughness of the rim 76c resulting from the resolution conversion is not so conspicuous that the roughness of the border 80c in the inset image 80 is negligible even through the masking process with the masking image 77 as shown in Fig.9. For this reason, it is possible to decide whether to make the masking process only for the rim 75c of the main image frame 75 or both for the rim 75c of the main image frame 75 and for the rim 76c of the inset sub image frame 76, according to the performance of the second masking processor 52, the image capacity, the size of the second image 73 and other appropriate factors.

In the above described embodiment, the PIP image 74 is generated by superimposing the sub image frame 76 on the bottom left corner of the main image frame 75. The position of the sub image frame 76, however, is not limited to the bottom left corner of the main image frame 75. The sub image frame 76 can be positioned wherever insofar as it does not hinder the view of the main image frame 75. For example, the sub image frame 76 may be laid on the upper right corner, on the bottom right corner or on the upper left corner of the main image frame 75. Moreover, in the above described embodiment, the composite image is the PIP image 74 where the sub image frame 76 is superimposed on the main image frame 75, but the composite image is not limited to this. It is possible to make the composite image by placing the main image frame 75 and the sub image frame 76 side by side.

In the above described embodiment, the procedure of generating the composite image is carried out in the order of generation of the sub image, resolution conversion of the main and sub images and composition of the respective images. However, the procedure of generating the composite image isn't limited to this order. It is also possible to generate the composite image by executing the image composition before the resolution conversion. For example, the procedure of generating the composite image may be in the order of generation of the sub image, composition of the main and sub images and resolution conversion of the composite image. Moreover, it is possible to execute the resolution conversion first to generate the composite image, like in the order of resolution conversion of the masked image to produce the main image, size reduction of the resolution-converted main image into the sub image and composing the main and sub images.

In the above described embodiment, the electronic endoscope 10 is recited as an exemplar of endoscopes. However, the present invention is not only applicable to the electronic endoscope, but applicable to other kinds of endoscopes, e.g. an ultrasonic endoscope. Although the above described embodiment has been referring to the medical endoscope for inspecting the patient, the present invention is not limited to the medical endoscopes but may be applicable to industrial endoscopes for inspecting tubes, ducts or the like. Moreover, in the above described embodiment, the CCD 20 is recited as the imaging device of the endoscope 10, the imaging device is not limited to the CCD image sensor but may for example be a CMOS image sensor.

Thus, the present invention is not to be limited to the above embodiments but, on the contrary, various modifications will be possible without departing from the scope of claims appended hereto.

## Claims

1. An image processor (36) for processing image data output from an imaging device (20) of an endoscope (10) to display at least an endoscopic image on a monitor (14), wherein each frame of the image data consists of an image area (70a) containing a subject image formed on an imaging surface of said imaging device and a useless area (70b) corresponding to a marginal area of said imaging surface where no subject image is formed, said image processor comprising:
a first masking device (50) for masking each frame of the image data with a masking image (71) to produce a first image frame (72), said masking image having an unmasking area (71a) for exposing only said image area as an image display area of the first image frame;
a resolution converting device (55) for converting resolution of the first image frame so as to adjust the resolution to said monitor; and
a second masking device (52) for making a masking process for exposing only an image display area (75a) of a resolution-converted first image frame (75).

2. An image processor as recited in claim 1, wherein said unmasking area (71a) of the masking image used by said first masking device (50) is approximately round, and the image display area of the first image frame has a round rim (72c) corresponding to said unmasking area, whereas said second masking device (52) makes the masking process with a masking image (77,81,84) having a round unmasking area (77a,81a,84a) that is smaller than or inscribed in the image display area (75a) of the resolution-converted first image frame on the presumption that the rim of the image display area gets blunt through the resolution conversion.

3. An image processor as recited in claim 2, further comprising:
a size reducing device (54) for reducing size of the first image frame to produce a second image frame (73);
a second resolution converting device (56) for converting resolution of the second image frame so as to adjust the resolution to said monitor; and
an image composer (59) for producing a composite image (74) from the resolution-converted first image frame (75) and a resolution-converted second image frame (76).

4. An image processor as recited in claim 3, wherein said second masking device (52) masks the composite image (74) with a specific masking image (77,84), which has the unmasking area (77a,84a) for exposing only the image display area of the first image frame and an unmasking area (77b,84b) for exposing the second image frame in the composite image.

5. An image processor as recited in claim 4, wherein said image composer (59) superimposes the second image frame on one of rectangular corners of the first image frame, and the specific masking image for the composite image has a cutout (77b) formed in a corner thereof corresponding to the corner on which the second image frame is superimposed, as the unmasking area for exposing the second image frame.

6. An image processor as recited in claim 3, wherein said size reducing device (54), said resolution converting devices (55, 56) for converting resolution of the first and second image frames, and said image composer (59) are configured in a single general-purpose IC for video output.

7. A method of processing image data output from an imaging device of an endoscope to display at least an endoscopic image on a monitor, wherein each frame of the image data consists of an image area containing a subject image formed on an imaging surface of said imaging device and a useless area corresponding to a marginal area of said imaging surface where no subject image is formed, said image processing method comprising:
a first masking step of masking each frame of the image data with a masking image to produce a first image frame, said masking image having an unmasking area for exposing only said image area as an image display area of the first image frame;
a size reducing step of reducing size of the first image frame to produce a second image frame;
a resolution converting step of converting resolution of the first and second image frames so as to adjust the resolution to said monitor;
an image composing step of producing a composite image from a resolution-converted first image frame and a resolution-converted second image frame; and
a second masking step of masking the composite image with a specific masking image that has an unmasking area for exposing only an image display area of the first image frame and an unmasking area for exposing the second image frame in the composite image.

8. A method of processing image data output from an imaging device of an endoscope to display at least an endoscopic image on a monitor, wherein each frame of the image data consists of an image area containing a subject image formed on an imaging surface of said imaging device and a useless area corresponding to a marginal area of said imaging surface where no subject image is formed, said image processing method comprising:
a first masking step of masking each frame of the image data with a masking image to produce a first image frame, said masking image having an unmasking area for exposing only said image area as an image display area of the first image frame;
a size reducing step of reducing size of the first image frame to produce a second image frame;
an image composing step of producing a composite image from the first image frame and the second image frame;
a resolution converting step of converting resolution of the composite image so as to adjust the resolution to said monitor; and
a second masking step of masking the resolution-converted composite image with a masking image that has an unmasking area for exposing only the image display area of the first image frame and a second unmasking area for exposing the second image frame in the composite image.

9. An image processor for processing image data output from an imaging device of an endoscope to display at least an endoscopic image on a monitor, wherein each frame of the image data consists of an image area containing a subject image formed on an imaging surface of said imaging device and a useless area corresponding to a marginal area of said imaging surface where no subject image is formed, said image processor comprising:
a first masking device of masking each frame of the image data with a masking image to produce a first image frame, said masking image having an unmasking area for exposing only said image area as an image display area of the first image frame;
a resolution converting device of converting resolution of the first image frame so as to adjust the resolution to said monitor;
a size reducing device of reducing size of the resolution-converted first image frame to produce a second image frame;
an image composing device of producing a composite image from the resolution-converted first image frame and the second image frame; and
a second masking device of masking the composite image with a masking image that has an unmasking area for exposing only an image display area of the first image frame and a second unmasking area for exposing the second image frame in the composite image.

## Patentansprüche

1. Bildprozessor (36) zum Verarbeiten von Bilddaten, die von einer Abbildungseinrichtung (20) eines Endoskops (10) ausgegeben werden, um auf einem Monitor (14) mindestens ein endoskopisches Bild anzuzeigen, wobei jedes Einzelbild der Bilddaten aus einem Bildbereich (70a), der ein auf einer Bildgebungsfläche der Abbildungseinrichtung erzeugtes Objektbild enthält, und einen ungenutzten Bereich (7b) entsprechend einem Randbereich der Bildgebungsfläche, wo kein Objektbild erzeugt wird, besteht, wobei der Bildprozessor aufweist:
eine erste Maskiereinrichtung (50) zum Maskieren jedes Einzelbilds der Bilddaten mit einem Maskierbild (71), um ein erstes Vollbild (72) zu erzeugen, wobei das Maskierbild einen maskenfreien Bereich (71 a) aufweist, um ausschließlich den Bildbereich als einen Bildanzeigebereich des ersten Vollbilds freizulegen;
eine Auflösungs-Umwandlungseinrichtung (55) zum Umwandeln der Auflösung des ersten Vollbilds in der Weise, dass die Auflösung an den Monitor angepasst wird; und
eine zweite Maskiereinrichtung (52) zum Ausführen eines Maskierprozesses, um lediglich einen Bildanzeigebereich (75a) eines in der Auflösung umgewandelten ersten Vollbilds (75) freizulegen.

2. Bildprozessor nach Anspruch 1, bei dem der maskenfreie Bereich (71 a) des von der ersten Maskiereinrichtung (50) verwendeten Maskierbilds im wesentlichen rund ist, und die Bildanzeigefläche des ersten Vollbilds einen dem maskenfreien Bereich entsprechenden runden Rand (72c) aufweist, wobei die zweite Maskiereinrichtung (52) den Maskierprozess mit einem Maskierbild (77, 81, 84) ausführt, der einen runden maskenfreien Bereich (77a, 81 a, 84a) aufweist, der kleiner ist als der oder eingeschrieben ist in den Bildanzeigebereich (75a) des in der Auflösung umgewandelten ersten Einzelbilds unter der Annahme, dass der Rand des Bildanzeigebereichs durch die Auflösungsumwandlung stumpf wird.

3. Bildprozessor nach Anspruch 2, weiterhin umfassend:
eine Größenreduziereinrichtung (54) zum Reduzieren der Größe des ersten Vollbilds, um ein zweites Vollbild (73) zu erzeugen;
eine zweite Auflösungs-Umwandlungseinrichtung (56) zum Umwandeln der Auflösung des zweiten Vollbilds in der Weise, dass die Auflösung an den Monitor angepasst wird; und
einen Bildzusammensetzer (59) zum Erzeugen eines zusammengesetzten Bilds (74) aus dem in der Auflösung umgewandelten ersten Einzelbilds (75) und einem in der Auflösung umgewandelten zweiten Einzelbild (76).

4. Bildprozessor nach Anspruch 3, bei dem die zweite Maskiereinrichtung (52) das zusammengesetzte Bild (74) mit einem speziellen Maskierbild (77, 84) maskiert, welches den maskenfreien Bereich (77a, 84a) aufweist, um ausschließlich den Bildanzeigebereich des ersten Vollbilds freizulegen, und einen maskenfreien Bereich (77b, 84b) zum Freilegen des zweiten Einzelbilds in dem zusammengesetzten Bild aufweist.

5. Bildprozessor nach Anspruch 4,bei dem der Bildzusammensetzer (59 das zweite Einzelbild einer der rechtwinkligen Ecken des ersten Einzelbilds überlagert, und das spezielle Maskierbild für das zusammengesetzte Bild einen in einer Ecke von ihm ausgebildeten Ausschnitt (77b) besitzt, entsprechend derjenigen Ecke, an welcher das zweite Einzelbild überlagert ist, um als maskenfreier Bereich das zweite Einzelbild freizulegen.

6. Bildprozessor nach Anspruch 3, bei dem die Größenreduziereinrichtung (54), die Auflösungs-Umwandlungseinrichtungen (55, 56) zum Umwandeln der Auflösung des ersten und des zweiten Vollbilds, und der Bildzusammensetzer (59) in einem einzelnen Mehrzweck-IC für Videoausgabe konfiguriert sind.

7. Verfahren zum Verarbeiten von Bilddaten, die von einer Abbildungseinrichtung eines Endoskops ausgegeben werden, um mindestens ein endoskopisches Bild auf einem Monitor anzuzeigen, wobei jedes Einzelbild der Bilddaten aus einem Bildbereich, der ein auf einer Abbildungsfläche der Abbildungseinrichtung erzeugtes Objektbild enthält, und einen ungenutzten Bereich entsprechend einem Randbereich der Abbildungsfläche, wo kein Objektbild erzeugt ist, enthält, wobei das Bildverarbeitungsverfahren umfasst:
einen ersten Maskierschritt zum Maskieren jedes Einzelbilds der Bilddaten mit einem Maskierbild, um ein erstes Vollbild zu erzeugen, wobei das Maskierbild einen maskenfreien Bereich enthält, um ausschließlich den Bildbereich als einen Bildanzeigebereich des ersten Vollbilds freizulegen;
einen Größenreduzierschritt zum Reduzieren der Größe des ersten Einzelbilds, um ein zweites Einzelbild zu erzeugen;
einen Auflösungs-Umwandlungsschritt zum Umwandeln der Auflösung des ersten und des zweiten Einzelbilds, um die Auflösung an den Monitor anzupassen;
einen Bildzusammensetzungsschritt zum Erzeugen eines zusammengesetzten Bilds aus einem in der Auflösung umgewandelten ersten Vollbild und einem in der Auflösung umgewandelten zweiten Vollbild; und
einen zweiten Maskierschritt zum Maskieren des zusammengesetzten Bilds mit einem speziellen Maskierbild, welches einen maskenfreien Bereich zum Freilegen ausschließlich eines Bildanzeigebereichs des ersten Vollbilds und einen maskenfreien Bereich zum Freilegen des zweiten Vollbilds innerhalb des zusammengesetzten Bilds aufweist.

8. Verfahren zum Verarbeiten von Bilddaten, die von einer Abbildungseinrichtung eines Endoskops ausgegeben werden, um mindestens ein endoskopisches Bild auf einem Monitor anzuzeigen, wobei jedes Einzelbild der Bilddaten aus einem Bildbereich, der ein auf einer Abbildungsfläche der Abbildungseinrichtung erzeugtes Objektbild enthält, und einen ungenutzten Bereich entsprechend einem Randbereich der Abbildungsfläche, wo kein Objektbild erzeugt ist, enthält, wobei das Bildverarbeitungsverfahren umfasst:
einen ersten Maskierschritt zum Maskieren jedes Einzelbilds der Bilddaten mit einem Maskierbild, um ein erstes Vollbild zu erzeugen, wobei das Maskierbild einen maskenfreien Bereich enthält, um ausschließlich den Bildbereich als einen Bildanzeigebereich des ersten Vollbilds freizulegen;
einen Größenreduzierschritt zum Reduzieren der Größe des ersten Einzelbilds, um ein zweites Einzelbild zu erzeugen;
einen Auflösungs-Umwandlungsschritt zum Umwandeln der Auflösung des zusammengesetzten Bilds, um die Auflösung an den Monitor anzupassen; und
einen zweiten Maskierschritt zum Maskieren des in der Auflösung umgewandelten zusammengesetzten Bilds mit einem Maskierbild, welches einen maskenfreien Bereich zum Freilegen ausschließlich des Bildanzeigebereichs des ersten Vollbilds und einen zweiten maskenfreien Bereich zum Freilegen des zweiten Vollbilds innerhalb des zusammengesetzten Bilds aufweist.

9. Bildprozessor zum Verarbeiten von Bilddaten, die von einer Abbildungseinrichtung eines Endoskops ausgegeben werden, um mindestens ein endoskopisches Bild auf einem Monitor anzuzeigen, wobei jedes Einzelbild der Bilddaten aus einem Bildbereich, welcher ein auf einer Abbildungsfläche der Abbildungseinrichtung erzeugtes Objektbild enthält, und einem ungenutzten Bereich entsprechend einem Randbereich der Abbildungsfläche, wo kein Objektbild erzeugt ist, besteht, wobei der Bildprozessor aufweist:
eine erste Maskiereinrichtung zum Maskieren jedes Einzelbilds der Bilddaten mit einem Maskierbild, um ein erstes Vollbild zu erzeugen, wobei das Maskierbild einen maskenfreien Bereich zum Freilegen ausschließlich des Bildbereichs als einen Bildanzeigebereich des ersten Vollbilds aufweist;
eine Auflösungs-Umwandlungseinrichtung zum Umwandeln der Auflösung des ersten Vollbilds, um die Auflösung an den Monitor anzupassen;
eine Größenreduziereinrichtung zum Reduzieren der Größe des in der Auflösung umgewandelten ersten Vollbilds, um ein zweites Vollbild zu erzeugen;
eine Bildzusammensetzeinrichtung zum Erzeugen eines zusammengesetzten Bilds aus dem in der Auflösung umgewandelten ersten Vollbild und dem zweiten Vollbild; und
eine zweite Maskiereinrichtung zum Maskieren des zusammengesetzten Bilds mit einem Maskierbild, welches einen maskenfreien Bereich zum Freilegen ausschließlich eines Bildanzeigebereichs des ersten Vollbilds und einem zweiten maskenfreien Bereich zum Freilegen des zweiten Vollbilds in dem zusammengesetzten Bild aufweist.

## Revendications

1. Processeur d'image (36) pour traiter des données d'image délivrées depuis un dispositif d'imagerie (20) d'un endoscope (10) pour afficher au moins une image endoscopique sur un moniteur (14), dans lequel chaque trame des données d'image est constituée d'une zone d'image (70a) contenant une image sujet formée sur une surface d'imagerie dudit dispositif d'imagerie et une zone inutile (70b) correspondant à une zone marginale de ladite surface d'imagerie où aucune image sujet n'est formée, ledit processeur d'image comportant :
un premier dispositif de masquage (50) pour masquer chaque trame des données d'image avec une image de masquage (71) afin de produire une première trame d'image (72), ladite image de masquage présentant une zone de démasquage (71a) pour exposer uniquement ladite zone d'image en tant que zone d'affichage d'image de la première trame d'image ;
un dispositif de conversion de résolution (55) pour convertir la résolution de la première trame d'image de manière à régler la résolution sur ledit moniteur ; et
un second dispositif de masquage (52) pour effectuer un processus de masquage afin d'exposer uniquement une zone d'affichage d'image (75a) d'une première trame d'image convertie en résolution (75).

2. Processeur d'image selon la revendication 1, dans lequel ladite zone de démasquage (71a) de l'image de masquage utilisée par ledit premier dispositif de masquage (50) est approximativement circulaire, et la zone d'affichage d'image de la première trame d'image possède un bord circulaire (72c) correspondant à ladite zone de démasquage, tandis que ledit second dispositif de masquage (52) effectue le processus de masquage avec une image de masquage (77, 81, 84) possédant une zone de démasquage circulaire (77a, 81a, 84a) qui est plus petite que ou inscrite dans la zone d'affichage d'image (75a) de la première trame d'image convertie en résolution en supposant que le bord de la zone d'affichage d'image s'estompe à cause de la conversion de résolution.

3. Processeur d'image selon la revendication 2, comportant en outre :
un dispositif de réduction de taille (54) pour réduire la taille de la première trame d'image afin de produire une seconde trame d'image (73) ;
un second dispositif de conversion de résolution (56) pour convertir la résolution de la seconde trame d'image de manière à régler la résolution sur ledit moniteur; et
un composeur d'image (59) produire une image composite (74) à partir de la première trame d'image convertie en résolution (75) et d'une seconde trame d'image convertie en résolution (76).

4. Processeur d'image selon la revendication 3, dans lequel ledit second dispositif de masquage (52) masque l'image composite (74) avec une image de masquage spécifique (77, 84), qui possède la zone de démasquage (77a, 84a) pour exposer uniquement la zone d'affichage d'image de la première trame d'image et une zone de démasquage (77b, 84b) pour exposer la seconde trame d'image dans l'image composite.

5. Processeur d'image selon la revendication 4, dans lequel ledit composeur d'image (59) superpose la seconde trame d'image sur l'un des coins rectangulaires de la première trame d'image, et l'image de masquage spécifique pour l'image composite présente une découpe (77b) formée dans l'un de ses coins correspondant au coin sur lequel la seconde trame d'image est superposée, en tant que zone de démasquage pour exposer la seconde trame d'image.

6. Processeur d'image selon la revendication 3, dans lequel ledit dispositif réducteur de taille (54), lesdits dispositifs de conversion de résolution (55, 56) pour convertir la résolution des première et seconde trames d'images, et ledit composeur d'image (59) sont configurés dans un unique circuit intégré universel pour une sortie vidéo.

7. Procédé de traitement de données d'image délivrées depuis un dispositif d'imagerie d'un endoscope pour afficher au moins une image endoscopique sur un moniteur, dans lequel chaque trame des données d'image est constituée d'une zone d'image contenant une image sujet formée sur une surface d'imagerie dudit dispositif d'imagerie et d'une zone inutile correspondant à une zone marginale de ladite surface d'imagerie où aucune image sujet n'est formée, ledit procédé de traitement d'image comportant:
une première étape de masquage pour masquer chaque trame des données d'image avec une image de masquage pour produire une première trame d'image, ladite image de masquage possédant une zone de démasquage pour exposer uniquement ladite zone d'image en tant que zone d'affichage d'image de la première trame d'image ;
une étape de réduction de taille pour réduire la taille de la première trame d'image afin de produire une seconde trame d'image ;
une étape de conversion de résolution pour convertir la résolution des première et seconde trames d'image de manière à régler la résolution sur ledit moniteur;
une étape de composition d'image pour produire une image composite à partir de la première trame d'image convertie en résolution et d'une seconde trame d'image convertie en résolution ; et
une seconde étape de masquage pour masquer l'image composite avec une image de masquage spécifique qui présente une zone de démasquage pour exposer uniquement une zone d'affichage d'image de la première trame d'image et une zone de démasquage pour exposer la seconde trame d'image dans l'image composite.

8. Procédé de traitement des données d'image délivrées depuis un dispositif d'imagerie d'un endoscope pour afficher au moins une image endoscopique sur un moniteur, dans lequel chaque trame des données d'image est constituée d'une zone d'image contenant une image sujet formée sur une surface d'imagerie dudit dispositif d'imagerie et d'une zone inutile correspondant à une zone marginale de ladite surface d'imagerie où aucune image sujet n'est formée, ledit procédé de traitement d'image comportant:
une première étape de masquage pour masquer chaque trame des données d'image avec une image de masquage pour produire une première image de trame, ladite image de masquage possédant une zone de démasquage pour exposer uniquement se ladite zone d'image en tant que zone d'affichage d'image de la première trame d'image ;
une étape de réduction de taille pour réduire la taille de la première trame d'image afin de produire une seconde trame d'image ;
une étape de composition d'image pour produire une image composite à partir de la première trame d'image et de la seconde trame d'image ;
une étape de conversion de résolution pour convertir la résolution de l'image composite de manière à régler la résolution sur ledit moniteur ; et
une seconde étape de masquage pour masquer l'image composite convertie en résolution avec une image de masquage qui possède une zone de démasquage pour exposer uniquement la zone d'affichage d'image de la première trame d'image et une seconde zone de démasquage pour exposer la seconde trame d'image dans l'image composite.

9. Processeur d'image pour traiter des données d'image délivrées depuis un dispositif d'imagerie d'un endoscope afin d'afficher au moins une image endoscopique sur un moniteur, dans lequel chaque trame des données d'image est constituée d'une zone d'image contenant une image sujet formée sur une surface d'imagerie dudit dispositif d'imagerie et d'une zone inutile correspondant à une zone marginale de ladite surface d'imagerie où aucune image sujet n'est formée, ledit processeur d'image comportant:
un premier dispositif de masquage pour masquer chaque trame des données d'image avec une image de masquage pour produire une première trame d'image, ladite image de masquage possédant une zone de démasquage pour exposer uniquement ladite zone d'image en tant que zone d'affichage d'image de la première trame d'image ;
un dispositif de conversion de résolution pour convertir la résolution de la première trame d'image de manière à régler la résolution sur ledit moniteur ;
un dispositif de réduction de taille pour réduire la taille de la première trame d'image convertie en résolution pour produire une seconde trame d'image ;
un dispositif de composition d'image pour produire une image composite à partir de la première trame d'image convertie en résolution et de la seconde trame d'image ; et
un second dispositif de masquage pour masquer l'image composite avec une image de masquage qui possède une zone de démasquage pour exposer uniquement une zone d'affichage d'image de la première trame d'image et une seconde zone de démasquage pour exposer la seconde trame d'image dans l'image composite.
